# EUROPEAN PATENT SPECIFICATION

(11) **EP 3 454 510 B1**
(45) Date of publication and mention of the grant of the patent: **30.12.2020**
(21) Application number: 17792498.2
(22) Date of filing: 04.05.2017
(51) Int. Cl.: H04L 12/703, H04L 12/723, H04L 12/707, H04L 12/721

(54) **MESSAGE FORWARDING METHOD AND APPARATUS**
NACHRICHTENWEITERLEITUNGSVERFAHREN UND -VORRICHTUNG
PROCÉDÉ ET APPAREIL DE RÉACHEMINEMENT DE MESSAGES

(30) Priority: 05.05.2016 CN 201610296706
(43) Date of publication of application: 13.03.2019
(73) Proprietor: ZTE Corporation, Shenzhen, Guangdong 518057 (CN)
(72) Inventor: MA, Yuan, Shenzhen Guangdong 518057 (CN); FANG, Haixia, Shenzhen Guangdong 518057 (CN); DANG, Shengxiong, Shenzhen Guangdong 518057 (CN)
(74) Representative: WBH Wachenhausen Patentanwälte PartG mbB
(86) International application number: PCT/CN2017/083091
(87) International publication number: WO 2017/190672

(56) References cited:
- WO-A1-2008/083590
- CN-A- 101 132 304
- CN-A- 101 330 424
- CN-A- 102 238 138
- CN-A- 104 468 347
- US-A1- 2011 299 551
- CHEN HUAWEI TECHNOLOGIES N SO TATA COMMUNICATIONS A LIU ERICSSON T SAAD CISCO SYSTEMS F XU VERIZON H: "Extensions to RSVP-TE for LSP Egress Local Protection; draft-ietf-teas-rsvp-egress-protection-01. txt", EXTENSIONS TO RSVP-TE FOR LSP EGRESS LOCAL PROTECTION; DRAFT-IETF-TEAS-RSVP-EGRESS-PROTECTION-01. TXT; INTERNET-DRAFT: INTERNET ENGINEERING TASK FORCE, INTERNET ENGINEERING TASK FORCE, IETF; STANDARDWORKINGDRAFT, INTERNET SOCIETY (ISOC) 4, RUE DES FAL, no. 1, 4 February 2015 (2015-02-04), pages 1-17, XP015123494, [retrieved on 2015-02-04]
- D Katz: "Bidirectional Forwarding Detection (BFD)", , 30 June 2010 (2010-06-30), XP055557637, Retrieved from the Internet: URL:https://www.rfc-editor.org/rfc/pdfrfc/ rfc5880.txt.pdf [retrieved on 2019-02-15]

## Description

### TECHNICAL FIELD

The present disclosure relates to the field of communications, and in particular to a message forwarding method and apparatus.

### BACKGROUND

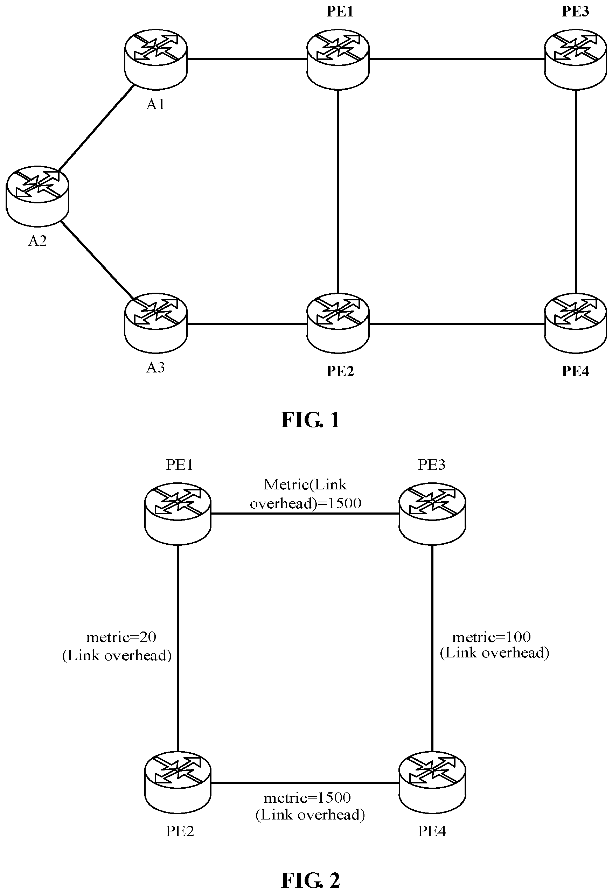

At present, in an Internet Protocol Radio Access Network (IPRAN) bearer solution adopted for a packet transport network of a domestic mobile backhaul service, a network topology is usually that an access layer adopts a ring network, and a convergence layer adopts a square-shaped network. A simplified networking diagram is as shown in FIG. 1. A1-A3 are devices on the access layer, and PE1-PE4 are devices on the convergence layer. On a service deployment, a base station backhaul service usually adopts a bridging solution of a Pseudo Wire (PW) plus Layer 3 Virtual Private Network (L3VPN). The access layer mainly deploys a PW Fast Re-Route (FRR), and the convergence layer and a core layer mainly deploy an L3VPN FRR. An outer layer protection may deploy a Label Distribution Protocol (LDP) FRR or a Traffic Engineering (TE) Hot Standby (HSB).

Document entitled "Extensions to RSVP-TE for LSE Egress Local Protection draft-ietf-teas-rsvp-egress-protection-01" describes extensions to RSVP-TE for locally protecting egress nodes of a Traffic Engineered LSP. WO 2008083590A1 relates to a method and apparatus for rapidly converging end-to-end services. Document entitled "Bidirectional Forwarding Detection (BFD)" discusses a protocol for detecting faults in the bidirectional path between two forwarding engines.

As shown in FIG. 1, a Provider Edge Device 3 (PE3) forms an L3VPN FRR to a PE1 and an L3VPN FRR to a PE2. A master route is PE3-PE1, and a standby route is PE3-PE2. At the same time, an LDP FRR function is enabled on outer layers of all the PEs. The LDP FRR is generated based on an Interior Gateway Protocol (IGP) routing protocol. A principle of calculating an FRR standby route based on the IPG routing protocol is that: a next hop device is selected hop by hop on a principle that the total metric value of a link reaching a destination device is minimum, and overlapped links are not allowed to exist in the standby route composed of the links passing through all the next hop devices. In the mouth-shaped network, certain routes for some devices may not form the FRR according to the principle of calculating the IGP FRR

As shown in FIG. 2, the PE3 calculates the IGP FRR reaching the PE1 according to the metric values for the links marked in FIG. 2. The master route is PE3-PE1 and the standby route is calculated as follows.

Firstly, the standby route selects the PE4 as the next hop in order to avoid overlapping with a link of the master route;
Then, a total metric value of the links of two routes reaching the PE1 is calculated on the PE4. One route is PE4-PE2-PE1, and the total metric value of the links is 1520; the other route is PE4-PE3-PE1, and the total metric value of the links is 1600, and thus the PE2 is preferentially selected as the next hop.

Next, a total metric value of the links of the two routes reaching the PE1 is calculated on the PE2. One route is PE2-PE1, and the total metric value of the links is 20; the other route is PE2-PE4-PE3-PE1, and the total metric value of the links is 3100, and thus the PE1 is preferentially selected as the next hop. In this way, the calculated standby route of the IGP FRR from the PE3 to the PE1 is PE3-PE4-PE2-PE1.

Similarly, the PE1 calculates the IGP FRR reaching the PE3. The master route is PE1-PE3. The standby route is calculated as follows.

Firstly, the standby route first selects the PE2 as the next hop in order to avoid overlapping with a link of the master route.

Then, a total metric value of the links of the two routes reaching the PE3 is calculated on the PE2. One route is PE2-PE4-PE3, and the total metric value of the links is 1600; the other route is PE2-PE1-PE3, and the total metric value of the links is 1520, and thus the PE1 is preferentially selected as the next hop. In this way, the standby route is from PE1 to PE2, then again to PE1, and there are overlapped links, which does not conform to the principle of calculating a route of the IGP FRR, so that the route from the PE1 to the PE3 cannot form the IGP FRR.

Calculating the FRR for other devices are as same as described above. The final result is that both the master route and the standby route of the L3VPN FRR from the PE3 to the PE1 and the L3VPN FRR from the PE3 to the PE2 may form the LDP FRR, but a master Label Switched Path (LSP) route of the master route and a master LSP route of the standby route pass through the link PE3-PE1, i.e., a part of the master route and the standby route share a link. In a reverse direction, the route from the PE1 to the PE3 cannot form the LDP FRR, although the route from the PE2 to the PE3 may form the LDP FRR on the PE2, an end-to-end FRR protection cannot be formed from the PE2 to the PE3 because an IP route is forwarded hop by hop, the next hop of the master route from the PE2 to the PE3 is the PE1 and the route from the PE1 to the PE3 cannot form the LDP FRR. Therefore, detection for the connectivity of the master route and the standby route of the L3VPN FRR from the PE3 to the PE1 and the L3VPN FRR from the PE3 to the PE2 is performed, i.e., a PEER Bidirectional Forwarding Detection (BFD) is implemented. In the direction from the PE3 to the PE1/PE2, there is the LDP FRR on the outer layer for an LSP protection, and in the direction from the PE1/PE2 to the PE3, there is no LDP FRR on the outer layer so that the protection cannot be implemented. Because a session for the PEER BFD is bidirectional, a packet loss in any direction will cause an interruption of the PEER BFD. Thus, when a failure occurs in the link PE3-PE1, both the master PEER BFD and the standby PEER BFD are interrupted, so that all forwarding layers of the master route and the standby route in the L3VPN FRR from the PE3 to the PE1 and the L3VPN FRR from the PE3 to the PE2 are set to be invalid, which results in a phenomenon of routing black hole, causing service interruption.

It hasn't been proposed an effective solution for the problem existed in the related art of the routing black hole.

### SUMMARY

The present invention is defined by the subject-matter of the independent claims. Advantageous embodiments are defined in the dependent claims. Embodiments of the present disclosure provide a method and device for forwarding a message, so as to at least solve a problem in the related art of the routing black hole.

According to an embodiment of the present disclosure, there is provided a method for forwarding a message. The method includes the following operations that: after determining that a failure occurs in a link of a common route shared by a master next hop and a standby next hop reaching a Customer Edge Device, CE, a Provider Edge Device, PE, determines a PE corresponding to the master next hop or the standby next hop whose failure is subsequently detected by the first PE; and the first PE forwards to the CE, a message to be sent to the CE through the PE corresponding to the master next hop or the standby next hop whose failure is subsequently detected by the first PE.

In an optional example, the operation that the first PE forwards to the CE, the message to be sent to the CE through the PE corresponding to the master next hop or the standby next hop whose failure is subsequently detected by the first PE may include that: the first PE determines a forwarding table for the PE corresponding to the master next hop or the standby next hop whose failure is subsequently detected by the first PE to forward the message to the CE; and the first PE forwards the message to the CE according to the forwarding table.

In an optional example, the operation that the first PE determines the forwarding table for the PE corresponding to the master next hop or the standby next hop whose failure is subsequently detected by the first PE to forward the message to the CE may include that: the first PE determines a Label Distribution Protocol, LDP, label table for the master next hop and the standby next hop and a Multiprotocol Label Switching, MPLS, service table; and the first PE determines the forwarding table according to a failure detection condition of the master next hop and the standby next hop, the MPLS service table and the LDP label table.

In an optional example, the operation that the first PE determines the forwarding table according to the failure detection condition of the master next hop and the standby next hop, the MPLS service table and the LDP label table may include at least one of the following that: when determining that a BFD state of the master next hop becomes down, the first PE determines whether the master next hop is the PE corresponding to the master next hop or the standby next hop whose failure is subsequently detected by the first PE; responsive to determining that the master next hop is not the PE corresponding to the master next hop or the standby next hop whose failure is subsequently detected by the first PE, a next hop index in the forwarding table is set to be the standby next hop, and simultaneously a forwarding state of the master next hop is set to be invalid; and responsive to determining that the master next hop is the PE corresponding to the master next hop or the standby next hop whose failure is subsequently detected by the first PE, the next hop index in the forwarding table is set to be the master next hop and the forwarding state of the master next hop is set to be valid; or, when determining that the BFD state of the standby next hop becomes down, the first PE determines whether the standby next hop is the PE corresponding to the master next hop or the standby next hop whose failure is subsequently detected by the first PE; responsive to determining that the master next hop is not the PE corresponding to the master next hop or the standby next hop whose failure is subsequently detected by the first PE, the next hop index in the forwarding table is set to be the master next hop and simultaneously the forwarding state of the standby next hop is set to be invalid; and responsive to determining that the master next hop is the PE corresponding to the master next hop or the standby next hop whose failure is subsequently detected by the first PE, the next hop index in the forwarding table is set to be the standby next hop and simultaneously the forwarding state of the standby next hop is set to be valid.

In an optional example, the method may further include at least one of the following that: after the first PE determines that the BFD state of the standby next hop becomes down, when the first PE determines that the BFD state of the master next hop becomes up, the next hop index in the forwarding table is updated to the master next hop, and simultaneously the forwarding state of the master next hop is set to be valid; or, after the first PE determines that the BFD state of the standby next hop becomes down, when the first PE determines that the BFD state of the standby next hop becomes up, the first PE determines whether the BFD state of the master next hop is up; responsive to determining that the BFD state of the master next hop is not up, the next hop index in the forwarding table is updated to the standby next hop, and simultaneously the forwarding state of the standby next hop is set to be valid; and responsive to determining that the BFD state of the master next hop is up, the next hop index in the forwarding table is maintained to be the master next hop, and simultaneously the forwarding state of the standby next hop is set to be valid.

In an optional example, the operation that the first PE forwards the message to the CE according to the forwarding table may include that: the first PE determines a next hop PE that forwards the message and a forwarding outgoing interface according to the forwarding table; and the first PE sends the message to the determined next hop PE through the determined forwarding outgoing interface and instructs the determined next hop PE to forward the message to the CE.

According to another embodiment of the present disclosure, there is provided a device for forwarding a message, which is applied to the first PE and includes: a determining module and a forwarding module. The determining module is configured to after determining that a failure occurs in the link of a common route shared by a master next hop and a standby next hop reaching a CE, determine a PE corresponding to the master next hop or the standby next hop whose failure is subsequently detected by the first PE. The forwarding module is configured to forward to the CE, the message to be sent to the CE through the PE corresponding to the master next hop or the standby next hop whose failure is subsequently detected by the first PE.

In an optional example, the forwarding module may include: a determining unit and a forwarding unit. The determining unit is configured to determine a forwarding table for the PE corresponding to the master next hop or the standby next hop whose failure is subsequently detected by the first PE to forward the message to the CE. The forwarding unit is configured to forward the message to the CE according to the forwarding table.

In an optional example, the determining unit may include a first determining subunit and a second determining subunit. The first determining subunit is configured to determine an LDP label table for the master next hop and the standby next hop and a MPLS service table. The second determining subunit is configured to determine the forwarding table according to the failure detection condition of the master next hop and the standby next hop, the MPLS service table and the LDP label table.

In an optional example, the second determining subunit may include a first processing secondary subunit and a second processing secondary subunit. The first processing secondary subunit is configured to when the first PE determines that a BFD state of the master next hop becomes down, determine whether the master next hop is the PE corresponding to the master next hop or the standby next hop whose failure is subsequently detected by the first PE, responsive to determining that the master next hop is not the PE corresponding to the master next hop or the standby next hop whose failure is subsequently detected by the first PE, set the next hop index in the forwarding table to be the standby next hop, and simultaneously set the forwarding state of the master next hop to be invalid, and responsive to determining that the master next hop is the PE corresponding to the master next hop or the standby next hop whose failure is subsequently detected by the first PE, set the next hop index in the forwarding table to be the master next hop, and simultaneously set the forwarding state of the master next hop to be valid. The second processing secondary subunit is configured to when the first PE determines that the BFD state of the standby next hop becomes down, determine whether the standby next hop is the PE corresponding to the master next hop or the standby next hop whose failure is subsequently detected by the first PE, responsive to determining that the standby next hop is not the PE corresponding to the master next hop or the standby next hop whose failure is subsequently detected by the first PE, set the next hop index in the forwarding table to be the master next hop, and simultaneously set the forwarding state of the standby next hop to be invalid, and responsive to determining that the standby next hop is the PE corresponding to the master next hop or the standby next hop whose failure is subsequently detected by the first PE, set the next hop index in the forwarding table to be the standby next hop, and simultaneously set the forwarding state of the standby next hop to be valid.

In an optional example, the first processing secondary subunit may be further configured to after the first PE determines that the BFD state of the master next hop becomes down, when the first PE determines that the BFD state of the master next hop becomes up, update the next hop index in the forwarding table to the master next hop and simultaneously set the forwarding state of the master next hop to be valid. The second processing secondary subunit may be further configured to after the first PE determines that the BFD state of the standby next hop becomes down, when the first PE determines that the BFD state of the standby next hop becomes up, determine whether the BFD state of the master next hop is up, responsive to determining that the BFD state of the master next hop is not up, update the next hop index in the forwarding table to the standby next hop, and simultaneously set the forwarding state of the standby next hop to be valid, and responsive to determining that the BFD state of the master next hop is up, maintain the next hop index in the forwarding table to be the master next hop, and simultaneously set the forwarding state of the standby next hop to be valid.

In an optional example, the forwarding unit may include a third determining subunit and a forwarding subunit. The third determining subunit is configured to determine, according to the forwarding table, the next hop PE that forwards the message and an actual outgoing interface. The forwarding subunit is configured to send the message to the determined next hop PE through the determined actual outgoing interface and instruct the determined next hop PE to forward the message to the CE.

According to yet another embodiment of the present disclosure, a storage medium is also provided, including a program stored therein, that when being executed, performs the method of any of the above operations.

According to still another embodiment of the present disclosure, a processor is also provided, for executing the program, that when being executed, performs the method of any of the above operations.

By means of the embodiments of the present disclosure, after a failure occurs in a link of the common route shared by a master next hop and a standby next hop, a message is forwarded through the PE corresponding to the master next hop or the standby next hop whose failure is subsequently detected by the first PE, which ensures that the message can be forwarded to the CE successfully, thus avoiding the problem of routing black hole. Therefore, the problem existed in the related art of the routing black hole can be solved, such that the effect of ensuring successful forwarding of the message is achieved.

### BRIEF DESCRIPTION OF DRAWINGS

The accompanying drawings, which constitute a part of this specification, are used for providing a further understanding of the present disclosure. Schematic embodiments of the present disclosure and descriptions thereof serve to explain the present disclosure and not intended to constitute an improper limit to the present disclosure the present disclosure. In the accompanying drawings:
FIG. 1 is a schematic diagram of a network topology structure of the IPRAN in the related art;
FIG. 2 is a schematic diagram of a mouth-shaped network topology on a convergence layer in the related art;
FIG. 3 is a flowchart of a method for forwarding a message according to an embodiment of the present disclosure;
FIG. 4 is a flowchart of a method for MPLS service escape and protection according to an embodiment of the present disclosure;
FIG. 5 is a schematic diagram of a network for MPLS service escape protection according to an embodiment of the present disclosure;
FIG. 6 is a structure diagram of a device for forwarding a message according to an embodiment of the present disclosure;
FIG. 7 is a structure diagram of a forwarding module 64 in a device for forwarding a message according to an embodiment of the present disclosure;
FIG. 8 is a structure diagram of a determining unit 72 in a device for forwarding a message according to an embodiment of the present disclosure;
FIG. 9 is a structure diagram of a second determining subunit 84 in a device for forwarding a message according to an embodiment of the present disclosure;
FIG. 10 is a structure diagram of a forwarding unit 74 in a device for forwarding a message according to an embodiment of the present disclosure; and
FIG. 11 is a structure diagram of a device for MPLS service escape and protection according to an embodiment of the present disclosure.

### DETAILED DESCRIPTION

The present disclosure will be explained below with reference to the accompanying drawings in combination with the embodiments. It is to be noted that the embodiments in the present application and features thereof may be combined with each other.

It is to be noted that the terms "first", "second" and the like in the specification, claims and the accompanying drawings of the present disclosure are used for distinguishing between similar objects and not necessarily for describing a particular order or sequential order.

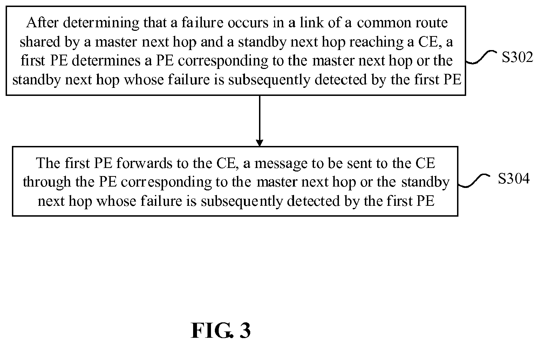

In an embodiment, a method for forwarding a message is provided. FIG. 3 is a flowchart of the method for forwarding the message according to an embodiment of the present disclosure. As shown in FIG. 3, the method for forwarding the message includes the following operations.

At S302, after determining that a failure occurs in a link of a common route shared by a master next hop and a standby next hop reaching a CE, a first PE determines a PE corresponding to the master next hop or the standby next hop whose failure is subsequently detected by the first PE.

At S304, the first PE forwards to the CE, a message to be sent to the CE through the PE corresponding to the master next hop or the standby next hop whose failure is subsequently detected by the first PE.

By means of the above operations, after a failure occurs in a link of a common route shared by a master next hop and a standby next hop, a message is forwarded through a PE corresponding to the master next hop or the standby next hop whose failure is subsequently detected by the first PE, which ensures that the message can be forwarded to the CE successfully, thus avoiding the problem of routing black hole. Therefore, the problem in the related art of the routing black hole can be solved, and service interruption is avoided, so that the effect of ensuring successful forwarding of the message is achieved.

In an optional embodiment, at the operation of S304, the first PE may forward to the CE the message to be sent to the CE through the PE corresponding to the master next hop or the standby next hop whose failure is subsequently detected by the first PE by the following manner. The first PE determines a forwarding table for the PE corresponding to the master next hop or the standby next hop whose failure is subsequently detected by the first PE to forward the message to the CE, and the first PE forwards the message to the CE according to the forwarding table.

In an optional embodiment, the operation that the first PE determines the forwarding table for the PE corresponding to the master next hop or the standby next hop whose failure is subsequently detected by the first PE to forward the message to the CE may include that: the first PE determines an LDP label table for the master next hop and the standby next hop, and a MPLS service table; and the first PE determines the forwarding table according to a failure detection condition of the master next hop and the standby next hop, the MPLS service table and the LDP label table. In this embodiment, the first PE may firstly form the MPLS service table and the LDP label table for an MPLS service to reach a route shared by a master next hop and a standby next hop, and generate an MPLS service forwarding table (corresponding to the above forwarding table) for traffic forwarding according to the MPLS service table and the LDP label table. Main information in the MPLS service forwarding table includes: a next hop PE to which the MPLS service is actually forwarded at present, and actual forwarding outgoing interfaces and forwarding states (including a valid state and an invalid state) of both the master next hop and the standby nest hop. When a BFD state of the master next hop or the standby next hop changes, the MPLS service forwarding table is updated immediately.

In an optional embodiment, the operation that the first PE determines the forwarding table according to the failure detection condition of the master next hop and the standby next hop, the MPLS service table and the LDP label table may include that: when determining that the BFD state of the master next hop becomes down, the first PE determines whether the master next hop is the PE corresponding to the master next hop or the standby next hop whose failure is subsequently detected by the first PE; responsive to determining that the master next hop is not the PE corresponding to the master next hop or the standby next hop whose failure is subsequently detected by the first PE, a next hop index in the forwarding table is set to be the standby next hop, and simultaneously a forwarding state of the master next hop is set to be invalid; and responsive to determining that the master next hop is the PE corresponding to the master next hop or the standby next hop whose failure is subsequently detected by the first PE, the next hop index in the forwarding table is set to be the master next hop (i.e., the master next hop is considered to be an escape route and forwarding of the message is maintained), and simultaneously the forwarding state of the master next hop is set to be valid. Further, when determining that the BFD state of the standby next hop becomes down, the first PE determines whether the standby next hop is the PE corresponding to the master next hop or the standby next hop whose failure is subsequently detected by the first PE; responsive to determining that the standby next hop is not the PE corresponding to the master next hop or the standby next hop whose failure is subsequently detected by the first PE, the next hop index in the forwarding table is set to be the master next hop, and simultaneously the forwarding state of the standby next hop is set to be invalid; responsive to determining that the standby next hop is the PE corresponding to the master next hop or the standby next hop whose failure is subsequently detected by the first PE, the next hop index in the forwarding table is set to be the standby next hop, and simultaneously the forwarding state of the standby next hop is set to be valid.

In an optional embodiment, the method further includes: after the first PE determines that the BFD state of the standby next hop becomes down, the next hop index in the forwarding table is updated to the master next hop and the forwarding state of the master next hop is set to be valid when the first PE determines that the BFD state of the master next hop becomes up. The method further includes: after the first PE determines that the BFD state of the standby next hop becomes down, the first PE determines whether the BFD state of the master next hop is up when determining that the BFD state of the standby next hop becomes up; responsive to determining that the BFD state of the master next hop is not up, the next hop index in the forwarding table is updated to the standby next hop, and simultaneously the forwarding state of the standby next hop is set to be valid; and responsive to determining that the BFD state of the master next hop is up, the next hop index in the forwarding table is maintained to be the master next hop, and simultaneously the forwarding state of the standby next hop is set to be valid.

In an optional embodiment, the operation that the first PE forwards the message to the CE according to the forwarding table includes that: the first PE determines a next hop PE that actually forwards the message and an actual forwarding outgoing interface according to the forwarding table; and the first PE sends the message to the determined next hop PE through the determined forwarding outgoing interface and indicates the determined next hop PE to forward the message to the CE. In this embodiment, when a failure occurs in a link of a common route for the MPLS service (corresponding to the message) to reach a master next hop PE and a standby next hop PE, the BFD state of the master next hop or the standby next hop will become down in a sequential order. If it is detected that the BFD state of the master next hop becomes down firstly and the BFD state of the standby next hop becomes down subsequently, the standby next hop of the MPLS service is maintained to be the escape route and the forwarding of the message is continued. In this way, after receiving data traffic, the PE retrieves the MPLS service forwarding table to obtain information of a valid standby next hop PE and an actual forwarding outgoing interface, and forwards the data traffic from the forwarding outgoing interface, and finally to the standby next hop PE. If it is detected that the BFD state of the standby next hop becomes down firstly and the BFD state of the master next hop becomes down subsequently, the master next hop of the MPLS service is maintained to be the escape route and the forwarding of the message is continued. In this way, after receiving the data traffic, the PE retrieves the MPLS service forwarding table to obtain information of a valid master next hop PE and the actual forwarding outgoing interface, and forwards the data traffic from the forwarding outgoing interface, and finally to the master next hop PE.

The method in the embodiments of the present disclosure will be further described in detail below by taking an MPLS L3VPN FRR service as a specific embodiment in combination with the accompanying drawings. The field of services involved in the embodiments of the present disclosure is not limited only to the MPLS L3VPN FRR service.

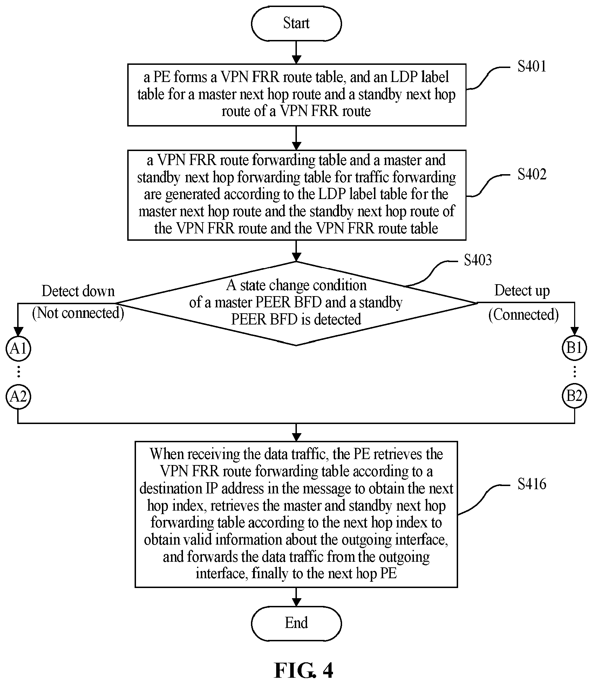

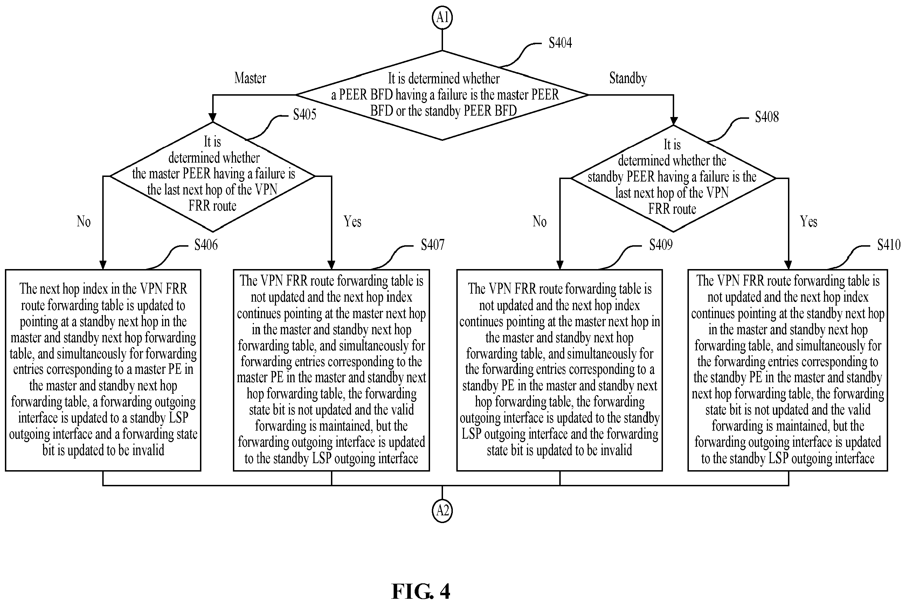

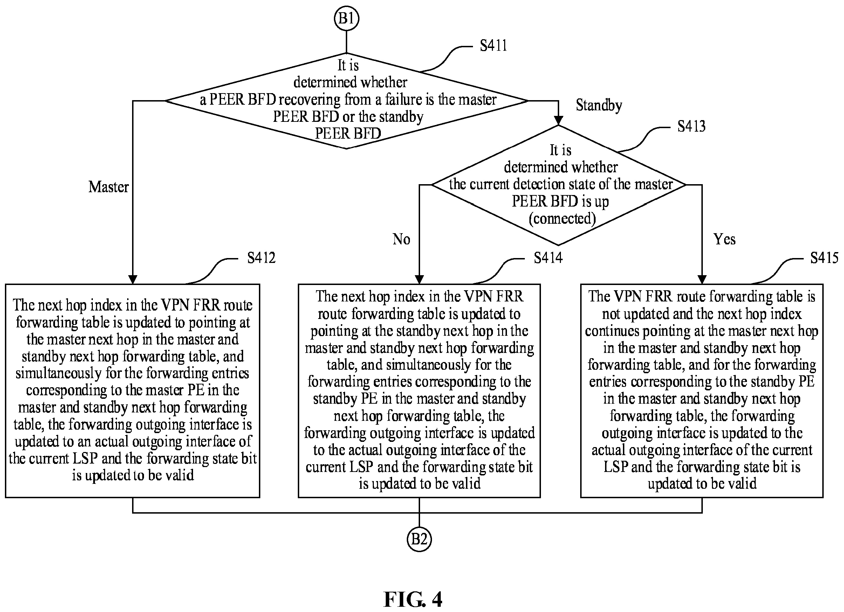

In an embodiment of the present disclosure, a method for MPLS service escape protection is provided. As shown in FIG. 4, a specific implementation process includes the following operations.

At S401, a PE (corresponding to the first PE as described above) forms a VPN FRR route table (or the MPLS service table as described above), and an LDP label table for a master next hop route and a standby next hop route of a VPN FRR route.

At S402, a VPN FRR route forwarding table and a master and standby next hop forwarding table (corresponding to the forwarding table as described above) for traffic forwarding are generated according to the LDP label table for the master next hop route and the standby next hop route of the VPN FRR route and the VPN FRR route table. When states of all links in the network are up, information of the VPN FRR route forwarding table is as shown in Table 1.

**Table 1**

| IP address prefix | Next hop index |
|---|---|
| IP address prefix forming the VPN | Pointing at the master PE in the master |
| FRR route | and standby next hop forwarding table |

Information of the master and standby next hop forwarding table is as shown in Table 2.

**Table 2**

| IP address of the next hop PE | Forwarding outgoing interface | Forwarding state bit |
|---|---|---|
| IP address of the master PE | Master LSP outgoing interface of the master route | Valid |
| IP address of the standby PE | Master LSP outgoing interface of the standby route | Valid |

At S403, a state change condition of a master PEER BFD (namely the master next hop) and a standby PEER BFD (namely the standby next hop) is detected. If it is detected that the state becomes down, the operation of S404 is performed; and if it is detected that the state becomes up, the operation of S411 is performed.

At S404, it is determined by the first PE whether a PEER BFD (namely the next hop) having a failure is the master PEER BFD or the standby PEER BFD. If it is determined that the failed PEER BFD is the master PEER BFD, the operation of S405 is performed; and if it is determined that the failed PEER BFD is the standby PEER BFD, the operation of S408 is performed.

At S405, it is determined by the first PE whether the master PEER BFD having a failure is the last next hop of the VPN FRR route (namely the PE corresponding to the master next hop or the standby next hop whose failure is subsequently detected by the first PE). If it is determined that the failed master PEER BFD is not the last next hop in the VPN FRR route, the operation of S406 is performed; and if it is determined that the failed master PEER BFD is the last next hop in the VPN FRR route, the operation of S407 is performed.

At S406, the next hop index in the VPN FRR route forwarding table is updated to pointing at a standby next hop in the master and standby next hop forwarding table. Simultaneously, for forwarding entries corresponding to a master PE in the master and standby next hop forwarding table, a forwarding outgoing interface is updated to a standby LSP outgoing interface and simultaneously a forwarding state bit is updated to be invalid.

At S407, the VPN FRR route forwarding table is not updated, and the next hop index continues pointing at the master next hop in the master and standby next hop forwarding table, i.e., the route is maintained to be an escape route. For the forwarding entries corresponding to the master PE in the master and standby next hop forwarding table, the forwarding state bit is not updated and the valid forwarding is maintained, but the forwarding outgoing interface is updated to the standby LSP outgoing interface.

At S408, it is determined by the first PE whether the standby PEER BFD having a failure is the last next hop of the VPN FRR route (i.e., the PE corresponding to the master next hop or the standby next hop whose failure is subsequently detected by the first PE). If it is determined that the failed standby PEER BFD is not the last next hop of the VPN FRR route, the operation of S409 is performed; and if it is determined that the failed standby PEER BFD is the last next hop of the VPN FRR route, the operation of S410 is performed.

At S409, the VPN FRR route forwarding table is not updated, and the next hop index continues pointing at the master next hop in the master and standby next hop forwarding table. Simultaneously, for the forwarding entries corresponding to a standby PE in the master and standby next hop forwarding table, the forwarding outgoing interface is updated to the standby LSP outgoing interface and the forwarding state bit is updated to be invalid.

At S410, the VPN FRR route forwarding table is not updated, and the next hop index continues pointing at the standby next hop in the master and standby next hop forwarding table, i.e., the route is maintained to be the escape route. Simultaneously, for the forwarding entries corresponding to the standby PE in the master and standby next hop forwarding table, the forwarding state bit is not updated and the valid forwarding is maintained, but the forwarding outgoing interface is updated to the standby LSP outgoing interface.

At S411, it is determined by the first PE whether the PEER BFD having a failure is the master PEER BFD or the standby PEER BFD. If it is determined that the failed PEER BFD is the master PEER BFD, the operation of S412 is performed; and if it is determined that the failed PEER BFD is the standby PEER BFD, the operation of S413 is performed.

At S412, the next hop index in the VPN FRR route forwarding table is updated to pointing at the master next hop in the master and standby next hop forwarding table. Simultaneously, for the forwarding entries corresponding to the master PE in the master and standby next hop forwarding table, the forwarding outgoing interface is updated to an actual outgoing interface of the current LSP and the forwarding state bit is updated to be valid.

At S413, it is determined by the first PE whether the current state of the master PEER BFD is up; if the currently detected state of the master PEER BFD is not up, the operation of S414 is performed; and if the currently detected state of the master PEER BFD is up, the operation of S415 is performed.

At S414, the next hop index in the VPN FRR route forwarding table is updated to pointing at the standby next hop in the master and standby next hop forwarding table. Simultaneously, for the forwarding entries corresponding to the standby PE in the master and standby next hop forwarding table, the forwarding outgoing interface is updated to the actual outgoing interface of the current LSP and the forwarding state bit is updated to be valid.

At S415, the VPN FRR route forwarding table is not updated, and the next hop index continues pointing at the master next hop in the master and standby next hop forwarding table. Simultaneously, for the forwarding entries corresponding to the standby PE in the master and standby next hop forwarding table, the forwarding outgoing interface is updated to the actual outgoing interface of the current LSP and the forwarding state bit is updated to be valid.

At S416, when receiving the data traffic, the PE retrieves the VPN FRR route forwarding table according to a destination IP address in the message to obtain the next hop index, retrieves the master and standby next hop forwarding table according to the next hop index to obtain valid information about the outgoing interface, and forwards the data traffic from the outgoing interface, finally to the next hop PE.

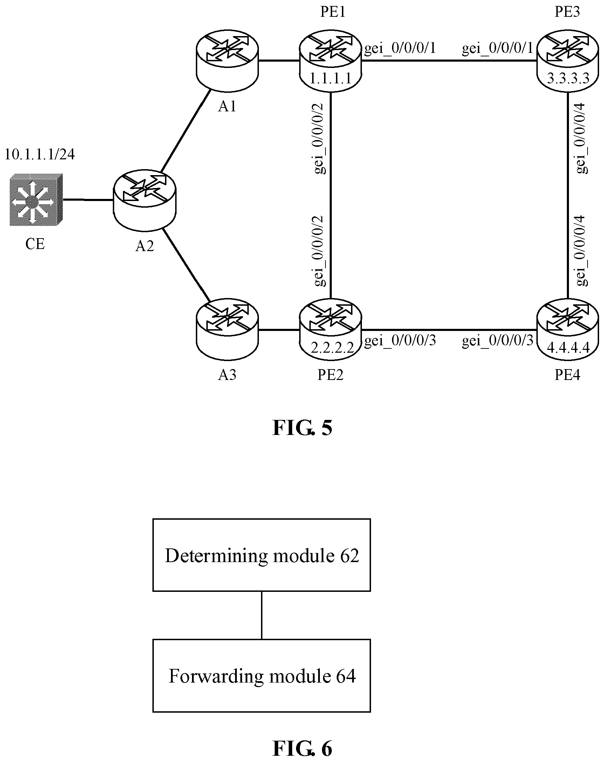

For clarity of description, a method for implementing MPLS service escape protection will be elaborated below in combination with the specific embodiments. A network model is as shown in FIG. 5, PE3 forms an LDP label table for a master next hop route and a standby next hop route to a VPN FRR route and a VPN FRR route table to the CE. A master next hop in the VPN FRR route is PE1 and a standby next hop is PE2. A master LSP of a VPN FRR master route is PE3-PE1 and a standby LSP thereof is PE3-PE4-PE2-PE1. The master LSP of a VPN FRR standby route is PE3-PE1-PE2 and the standby LSP thereof is PE3-PE4-PE2. The link of a common route shared by the master LSP of the VPN FRR master route and the master LSP of the VPN FRR standby route is PE1-PE3.

A master and standby next hop forwarding table for traffic forwarding and a VPN FRR route forwarding table are generated according to the VPN FRR route table and the LDP label table. In the network shown in FIG. 5, when states of all links are up, information of the VPN FRR route forwarding table is as shown in Table 3.

**Table 3**

| IP address prefix | Next hop index |
|---|---|
| 10.1.1.0/24 | 1.1.1.1 |

Information of the master and standby next hop forwarding table is as shown in Table 4. If a value of a field in a forwarding state bit is 1, then the outgoing interface is valid, and if the value in the field of the forwarding state bit is 0, then the outgoing interface is invalid.

**Table 4**

| IP address of the next hop PE | Forwarding outgoing interface | Forwarding state bit |
|---|---|---|
| 1.1.1.1 | gei_0/0/0/1 | 1 |
| 2.2.2.2 | gei_0/0/0/1 | 1 |

At this point, when receiving the data traffic to be sent to the CE, the PE (namely the PE3) retrieves the VPN FRR route forwarding table according to the destination IP address 10.1.1.1 in the message to obtain the forwarding entries which the next hop index points at and corresponds to 1.1.1.1 in the master and standby next hop forwarding table. Then the PE retrieves the forwarding entries corresponding to 1.1.1.1 in the master and standby next hop forwarding table according to the next hop index to obtain a valid outgoing interface which is gei_0/0/0/1, forwards the data traffic from the outgoing interface to the next hop PE1 and finally the PE1 forwards the data traffic to the CE.

When a failure occurs in the link PE1-PE3 of a common route shared by the master LSP of the VPN FRR master route and the master LSP of the VPN FRR standby route, it is detected that the states of the master PEER BFD and standby PEER BFD become down in a sequential order. If it is detected that the state of the master PEER BFD becomes down firstly and the state of the standby PEER BFD becomes down subsequently, the standby route of the VPN FRR route is maintained to be an escape route, i.e., the next hop index in the VPN FRR route forwarding table points at the standby PE in the master and standby next hop forwarding table. Information of the VPN FRR route forwarding table is as shown in Table 5.

**Table 5**

| IP address prefix | Next hop index |
|---|---|
| 10.1.1.0/24 | 2.2.2.2 |

Information of the master and standby next hop forwarding table is as shown in Table 6.

**Table 6**

| IP address of the next hop PE | Forwarding outgoing interface | Forwarding state bit |
|---|---|---|
| 1.1.1.1 | gei_0/0/0/4 | 0 |
| 2.2.2.2 | gei_0/0/0/4 | 1 |

At this point, when receiving the data traffic sent to the CE, the PE retrieves the VPN FRR route forwarding table according to the destination IP address 10.1.1.1 in the message to obtain the forwarding entries, which the next hop index points at and corresponds to 2.2.2.2 in the master and standby next hop forwarding table. Then the PE retrieves the forwarding entries corresponding to 2.2.2.2 in the master and standby next hop forwarding table according to the next hop index to obtain a valid outgoing interface which is gei_0/0/0/4, forwards the data traffic from the outgoing interface, through the PE4 and finally to the next hop PE2, and then the PE2 forwards the data traffic to the CE.

If it is detected that the state of the standby PEER BFD becomes down firstly and the detected state of the mater PEER BFD becomes down subsequently, the master route of the VPN FRR route is maintained to be the escape route, i.e., the next hop index of the VPN FRR route forwarding table points at the master PE in the master and standby next hop forwarding table. The information of the VPN FRR route forwarding table is as shown in Table 7.

**Table 7**

| IP address prefix | Next hop index |
|---|---|
| 10.1.1.0/24 | 1.1.1.1 |

The information of the master and standby next hop forwarding table is as shown in Table 8.

**Table 8**

| IP address of the next hop PE | Forwarding outgoing interface | Forwarding state bit |
|---|---|---|
| 1.1.1.1 | gei_0/0/0/4 | 1 |
| 2.2.2.2 | gei_0/0/0/4 | 0 |

At this point, when receiving the data traffic sent to the CE, the PE retrieves the VPN FRR route forwarding table according to the destination IP address 10.1.1.1 in the message to obtain the forwarding entries, which the next hop index points at and corresponds to 1.1.1.1 in the master and standby next hop forwarding table. Then, the PE retrieves the forwarding entries corresponding to 1. 1. 1. 1 in the master and standby next hop forwarding table according to the next hop index to obtain the valid outgoing interface which is gei_0/0/0/4, forwards the data traffic from the outgoing interface, through the PE4 and the PE2 and finally to the next hop PE1, and then the PE1 forwards the data traffic to the CE.

Through the above descriptions for the implementations, those skilled in the art may clearly know that the method according to the above embodiments may be implemented in software and a necessary general hardware platform, certainly by means of hardware, while the former is the better implementation in many cases. Based on this understanding, the technical solution of the present disclosure substantially or the part making a contribution to the conventional art can be embodied in the form of software product. The computer software product is stored in a storage medium (for example, a Read-Only Memory (ROM)/Random Access Memory (RAM), a magnetic disk and a compact disc), including a number of instructions to cause a computer device (which can be a personal computer, a server or a network device and the like) to perform all or part of the method in each embodiment of the present disclosure.

In this embodiment, a device for forwarding a message is also provided. The device is configured to implement the above embodiments and preferred implementations, which will not be repeated here for those having been described. The term "module" used below may realize a combination of software and/or hardware with an intended function. While the device described in the following embodiment is preferably implemented in software, implementations in hardware or a combination of software and hardware is possible and contemplated.

FIG. 6 is a structure diagram of a device for forwarding a message according to an embodiment of the present disclosure, which may be applied to the first PE. As shown in FIG. 6, the device includes a determining module 62 and a forwarding module 64. The device is described as below.

The determining module 62 is configured to after determining that a failure occurs in a link of a common route shared by a master next hop and a standby next hop reaching a CE, determine a PE corresponding to the master next hop or the standby next hop whose failure is subsequently detected by the first PE. The forwarding module 64 is connected to the determining module 62 and configured to forward to the CE, a message to be sent to the CE through the PE corresponding to the master next hop or the standby next hop whose failure is subsequently detected by the first PE.

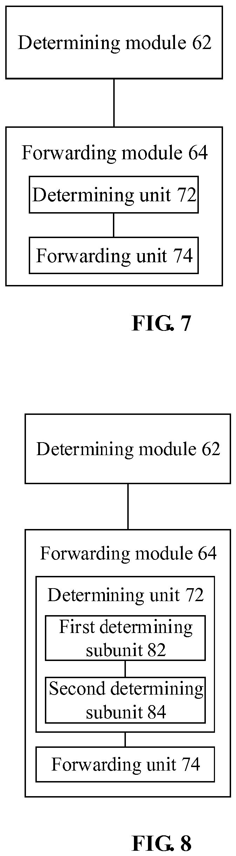

FIG. 7 is a structure diagram of the forwarding module 64 in the method for forwarding a message according to an embodiment of the present disclosure. As shown in FIG. 7, the forwarding module 64 includes a determining unit 72 and a forwarding unit 74. The forwarding module 64 is described below.

The determining unit 72 is configured to determine a forwarding table for forwarding a message to the CE through the PE corresponding to the master next hop or the standby next hop whose failure is subsequently detected by the first PE. The forwarding unit 74 is connected to the determining unit 72 and configured to forward the message to the CE according to the forwarding table.

FIG. 8 is a structure diagram of the determining unit 72 in the method for forwarding a message according to an embodiment of the present disclosure. As shown in FIG. 8, the determining unit 72 includes a first determining subunit 82 and a second determining subunit 84. The determining unit 72 is described as below.

The first determining subunit 82 is configured to determine an LDP label table for the master next hop and the standby next hop and an MPLS service table. The second determining subunit 84 is connected to the first determining subunit 82 and configured to determine the forwarding table according to the failure detection condition of the master next hop and the standby next hop, the MPLS service table and the LDP label table.

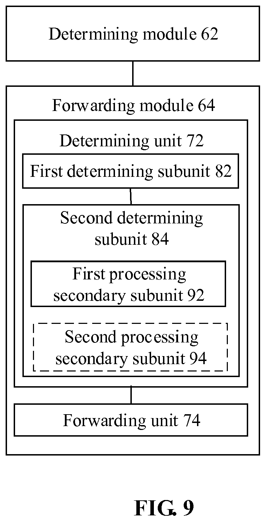

FIG. 9 is a structure diagram of the second determining subunit 84 in the method for forwarding a message according to an embodiment of the present disclosure. As shown in FIG. 9, the second determining subunit 84 includes at least one of a first processing secondary subunit 92 or a second processing secondary subunit 94. The second determining subunit 84 is described as below.

The first processing secondary subunit 92 is configured to when the first PE determines that the BFD state of the master next hop becomes down, determine whether the master next hop is the PE corresponding to the master next hop or the standby next hop whose failure is subsequently detected by the first PE, responsive to determining that the master next hop is not the PE corresponding to the master next hop or the standby next hop whose failure is subsequently detected by the first PE, set the next hop index in the forwarding table to be the standby next hop, and simultaneously set the forwarding state of the master next hop to be invalid; and responsive to determining that the master next hop is the PE corresponding to the master next hop or the standby next hop whose failure is subsequently detected by the first PE, set the next hop index in the forwarding table to be the master next hop, and simultaneously set the forwarding state of the master next hop to be valid.

The second processing secondary subunit 94 is configured to when the first PE determines that the BFD state of the standby next hop becomes down, determine whether the standby next hop is the PE corresponding to the master next hop or the standby next hop whose failure is subsequently detected by the first PE, responsive to determining that the standby next hop is not the PE corresponding to the master next hop or the standby next hop whose failure is subsequently detected by the first PE, set the next hop index in the forwarding table to be the master next hop, and simultaneously set the forwarding state of the standby next hop to be invalid; and responsive to determining that the standby next hop is the PE corresponding to the master next hop or the standby next hop whose failure is subsequently detected by the first PE, set the next hop index in the forwarding table to be the standby next hop, and simultaneously set the forwarding state of the standby next hop to be valid.

In an optional embodiment, the first processing secondary subunit 92 is further configured to perform at least one of the following: after the first PE determines that the BFD state of the master next hop becomes down, when the first PE determines that the BFD state of the master next hop becomes up, update the next hop index in the forwarding table to the master next hop and simultaneously set the forwarding state of the master next hop to be valid.

Or, the second processing secondary subunit 94 is further configured to, after the first PE determines that the BFD state of the standby next hop becomes down, when the first PE determines that the BFD state of the standby next hop becomes up, determine whether the BFD state of the master next hop is up; responsive to determining that the BFD state of the master next hop is not up, update the next hop index in the forwarding table to the standby next hop, and simultaneously set the forwarding state of the standby next hop to be valid; and responsive to determining that the BFD state of the master next hop is up, maintain the next hop index in the forwarding table to be the master next hop, and simultaneously set the forwarding state of the standby next hop to be valid.

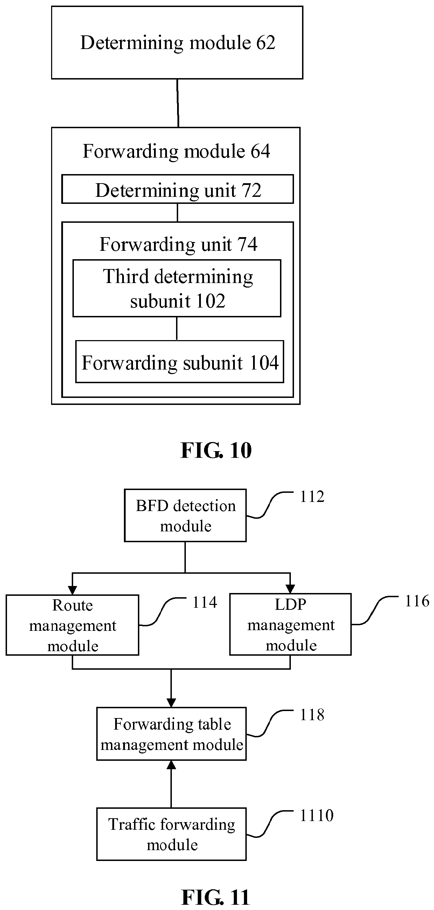

FIG. 10 is a structure diagram of the forwarding unit 74 in the device for forwarding a message according to an embodiment of the present disclosure. As shown in FIG. 10, the forwarding unit 74 includes a third determining subunit 102 and a forwarding subunit 104. The forwarding unit 74 is described as below.

The third forwarding subunit 102 is configured to determine a next hop PE that forwards the message and a forwarding outgoing interface according to the forwarding table. The forwarding subunit 104 is connected to the third forwarding subunit 102 and configured to send the message to the determined next hop PE through the determined forwarding outgoing interface and instruct the determined next hop PE to forward the message to the CE.

The device in embodiments of the present disclosure is further described in detail below in combination with the accompanying drawings.

In an embodiment of the present disclosure, a device for MPLS service escape protection is provided. As shown in FIG. 11, the device includes a BFD detection module 112 (corresponding to the determining module 62), a route management module 114 (corresponding to the first determining subunit 82), an LDP management module 116 (corresponding to the first determining subunit 82), a forwarding table management module 118 (corresponding to the second determining subunit 84), and a traffic forwarding module 1110 (corresponding to the forwarding unit 74).

The route management module 114 is configured to create a VPN FRR route table on the PE.

The LDP management module 116 is configured to create an LDP label table for the master next hop route and the standby next hop route of the VPN FRR route.

The route management module 114 and the LDP management module 116 are connected to the forwarding table management module 118. In this way, the forwarding table management module 118 generates the VPN FRR route forwarding table and the master and standby next hop forwarding table for traffic forwarding according to the VPN FRR route table created by the route management module 114. The next hop index in the VPN FRR route forwarding table points at a master PE or a standby PE in the master and standby next hop forwarding table for identifying a next hop to which the current VPN FRR route actually forwards. Moreover, an actual forwarding outgoing interface for the master next hop route and the standby next hop route of the VPN FRR route in the master and standby next hop forwarding table is generated according to the LDP label table created by the LDP management module 116. At the same time, forwarding state bits of the master next hop route and the standby next hop route of the VPN FRR route in the master and standby next hop forwarding table are set to be valid or invalid according to the states detected by the BFD detection module 112, of the master PEER BFD and the standby PEER BFD.

The BFD detection module 112 detects the states of the master PEER BFD and the standby PEER BFD. Once the BFD detection module 112 detects that the BFD state changes, the VPN FRR route forwarding table and the master and standby next hop forwarding table of the forwarding table management module 118 are updated immediately.

The traffic forwarding module 1110 is connected to the forwarding table management module 118 and configured to when the PE receives the data traffic, retrieve the VPN FRR route forwarding table of the forwarding table management module 118 according to the destination IP address in the message to obtain the next hop index, then retrieve the master and standby next hop forwarding table of the forwarding table management module 118 according to the next hop index to obtain valid information about the outgoing interface, and forward the data traffic from the outgoing interface, finally to the next hop PE.

It can be seen from the specific implementation processes of the embodiments provided by the present disclosure that, the method and device for MPLS service escape protection implemented in the embodiments of the present disclosure enable to solve a problem of service interruption caused by a phenomenon of the routing black hole in forwarding, since when a failure occurs in the link of the common route for the MPLS service to reach the master next hop PE and the standby next hop PE and both the BFD of the master next hop and the BFD of the standby next hop are interrupted, forwarding layers of the master next hop and the standby next hop of the MPLS service are set to be invalid, which enhances the reliability of the network and further improves feasibility of an IPRAN bearer solution.

It is to be noted that, the above modules may be implemented in software or hardware, and the latter may be implemented in, but not limited to the following way: all of the above modules are located in the same processor; or, the above modules are located respectively in different processors in any combination.

An embodiment of the present disclosure also provides a storage medium. In an optional embodiment, in this embodiment, the storage medium may be configured to store program codes for performing the following operations.

At S1, after determining that a failure occurs in a link of a common route shared by a master next hop and a standby next hop reaching a CE, a first PE determines a PE corresponding to the master next hop or the standby next hop whose failure is subsequently detected by the first PE.

At S2, the first PE forwards to the CE, a message to be sent to the CE through the PE whose failure is subsequently detected by the first PE.

Alternatively, in the embodiment, the above storage media include, but not limited to, a USB flash disk, an ROM, an RAM, a mobile hard disk, a magnetic disk, a compact disc, and other media capable of storing the program codes.

Alternatively, in the embodiment, the processor performs the operations in the above embodiments of the method according to the program codes stored in the storage medium.

Alternatively, specific examples in the present embodiment may be described with reference to examples described in the above embodiments and alternative embodiments, and will not be elaborated herein.

It is apparent that those skilled in the art should appreciate that the above modules and steps of the present disclosure may be implemented by a general-purpose computing device, and they may be centralized in a single computing device or distributed on a network composed of multiple computing devices, and they may optionally be implemented by program codes executed by the computing device, so that they may be stored in a storage device and executed by the computing device. In some situations, the presented or described steps may be executed in an order different from that described here, or they are made into integrated circuit modules respectively; or multiple modules or steps thereof are made into a single integrated circuit module to realize. Therefore, the present disclosure is not limited to any particular combination of hardware and software.

The above is only the preferred embodiments of the present disclosure and not intended to limit the present disclosure. It is apparent that those skilled in the art can make various modifications and variations to the disclosure.

### INDUSTRIAL APPLICABILITY

As mentioned above, the method and device for forwarding a message provided by the embodiments of the present disclosure have the following beneficial effects: the problem of route black hole is solved and service interruption is avoided, such that the effect of ensuring the successful forwarding of the message is achieved.

## Claims

1. A method for forwarding a message, executed by a first Provider Edge Device, PE, (PE3) wherein the message is forwarded to a Customer Edge Device, CE, via a master route (PE3-PE1) or a standby route (PE3-PE1-PE2), wherein the master route comprises a master PE (PE1) corresponding to a master next-hop which is a last hop to the CE, the standby route comprises a standby PE (PE2) corresponding to a standby next-hop which is a last hop to the CE,
wherein the first PE comprises a first forwarding outgoing interface to a link of a common route (PE3-PE1) shared by the master route and the standby route and a second forwarding outgoing interface to one other PE (PE4);
wherein the first PE determines a forwarding table for forwarding the message and wherein the forwarding table comprises;
a first entry for the master next-hop to use the first forwarding outgoing interface;
a second entry for the standby next-hop to use the first forwarding outgoing interface;
**characterized by** the method comprising:
determining that a failure has occurred in the link of the common route shared by the master route and the standby route;
determining that the master PE and the standby PE has failed, wherein a Bidirectional Forwarding Detection, BFD, state is used to detect whether the master PE or the standby PE fails first;
if the master PE has failed first and the standby PE has failed second, maintaining the standby route as an active route (PE3-PE4-PE2) wherein the standby route is modified to route via the one other PE (PE4), and updating the forwarding table, wherein the first entry is updated to use the second forwarding outgoing interface and wherein a forwarding state of the first entry is set as invalid; the second entry is updated to use the second forwarding outgoing interface and wherein a forwarding state of the second entry is set as valid;
if the standby PE has failed first and the master PE has failed second, maintaining the master route as the active route (PE3-PE4-PE2-PE1) wherein the master route is modified to route via the one other PE (PE4); and updating the forwarding table, wherein the first entry is updated to use the second forwarding outgoing interface and wherein the forwarding state of the first entry is set as valid; the second entry is updated to use the second forwarding outgoing interface and wherein the forwarding state of the second entry is set as invalid;
forwarding the message to the CE via the active route according to the forwarding table.

2. The method of claim 1, wherein forwarding the message to the CE via the active route comprises:
determining the forwarding table for the active route for forwarding the message.

3. The method of claim 2, wherein determining the forwarding table for the active route for forwarding the message comprises:
determining a Label Distribution Protocol, LDP, label table for the master PE and the standby PE and a Multiprotocol Label Switching, MPLS, service table; and
determining the forwarding table according to a failure detection condition of the master PE and the standby PE, the MPLS service table and the LDP label table.

4. The method of claim 3, wherein determining the forwarding table according to the failure detection condition of the master PE and the standby PE, the MPLS service table and the LDP label table comprises:
when determining that the BFD state of the master PE becomes down,
if the master PE fails first and the standby PE fails second, setting a next hop index in the forwarding table to be the standby PE and simultaneously setting the forwarding state of the master PE to be invalid; and
if the standby PE fails first and the master PE fails second, setting the next hop index in the forwarding table to be the master PE and simultaneously setting the forwarding state of the master PE to be valid.

5. The method of claim 3, wherein determining the forwarding table according to the failure detection condition of the master PE and the standby PE, the MPLS service table and the LDP label table further comprises:
when determining that the BFD state of the standby PE becomes down,
if the standby PE fails first and the master PE fails second, setting a next hop index in the forwarding table to be the master PE and simultaneously setting the forwarding state of the standby PE to be invalid; and
if the master PE fails first and the standby PE fails second, setting the next hop index in the forwarding table to be the standby PE and simultaneously setting the forwarding state of the standby PE to be valid.

6. The method of claim 4, wherein the method further comprises:
after the BFD state of the master PE becomes down, when the BFD state of the master PE becomes up, updating the next hop index in the forwarding table to the master PE and simultaneously setting the forwarding state of the master PE to be valid.

7. The method of claim 5, wherein the method further comprises:
after the BFD state of the standby PE becomes down, when the BFD state of the standby PE becomes up, determining whether the BFD state of the master PE is up;
responsive to determining that the BFD state of the master PE is not up, updating the next hop index in the forwarding table to the standby PE and simultaneously updating the forwarding state of the standby PE to be valid; and
responsive to determining that the BFD state of the master PE is up, maintaining the next hop index in the forwarding table to be the master PE and simultaneously setting the forwarding state of the standby PE to be valid.

8. The method of claim 2, wherein forwarding the message to the CE according to the forwarding table comprises:
determining a next hop PE that forwards the message and a forwarding outgoing interface according to the forwarding table; and
sending the message to the determined next hop PE through the determined forwarding outgoing interface and instructing the determined next hop PE to forward the message to the CE.

9. A device for forwarding a message, the device applied to a first Provider Edge Device, PE, (PE3) wherein the message is forwarded to a Customer Edge Device, CE, via a master route (PE3-PE1) or a standby route (PE3-PE1- PE2), wherein the master route comprises a master PE (PE1) corresponding to a master next-hop which is a last hop to the CE, the standby route comprises a standby PE (PE2) corresponding to a standby next-hop which is a last hop to the CE,
wherein the first PE comprises a first forwarding outgoing interface to a link of a common route (PE3-PE1) shared by the master route and the standby route and a second forwarding outgoing interface to one other PE (PE4);
wherein the first PE is configured to determine a forwarding table for forwarding the message and wherein the forwarding table comprises;
a first entry for the master next-hop to use the first forwarding outgoing interface;
a second entry for the standby next-hop to use the first forwarding outgoing interface;
**characterized by** the device comprising:
a memory configured to store instructions; and
a processor configured to execute the instructions to:
determine that a failure has occurred in the link of the common route shared by the master route and the standby route, determine that the master PE and the standby PE has failed, wherein a Bidirectional Forwarding Detection, BFD, state is used to detect
whether the master PE or the standby PE fails first;
if the master PE has failed first and the standby PE has failed second, maintain the standby route as an active route (PE3-PE4-PE2) wherein the standby route is modified to route via the one other PE (PE4), and update the forwarding table,
wherein the first entry is updated to use the second forwarding outgoing interface and wherein a forwarding state of the first entry is set as invalid; the second entry is updated to use the second forwarding outgoing interface and wherein a forwarding state of the second entry is set as valid;
if the standby PE has failed first and the master PE has failed second, maintain the master route as the active route (PE3-PE4-PE2-PE1) wherein the master route is modified to route via the one other PE (PE4); and update the forwarding table, wherein the first entry is updated to use the second forwarding outgoing interface and wherein the forwarding state of the first entry is set as valid; the second entry is updated to use the second forwarding outgoing interface and wherein the forwarding state of the second entry is set as invalid;
forward the message to the CE via the active route according to the forwarding table.

10. The device of claim 9, wherein the processor is further configured to:
determine the forwarding table for the active route for forwarding the message.

11. The device of claim 10, wherein the processor is further configured to:
determine a Label Distribution Protocol, LDP, label table for the master PE and the standby PE and a Multiprotocol Label Switching, MPLS, service table; and
determine the forwarding table according to a failure detection condition of the master PE and the standby PE, the MPLS service table and the LDP label table.

12. The device of claim 11, wherein the processor is further configured to:
when the first PE determines that the BFD state of the master PE becomes down,
if the master PE fails first and the standby PE fails second, set a next hop index in the forwarding table to be the standby PE and simultaneously set the forwarding state of the master PE to be invalid; and
if the standby PE fails first and the master PE fails second, set the next hop index in the forwarding table to be the master PE and simultaneously set the forwarding state of the master PE to be valid; or
when the first PE determines that the BFD state of the standby PE becomes down,
if the standby PE fails first and the master PE fails second, setting the next hop index in the forwarding table to be the master PE and simultaneously setting the forwarding state of the standby PE to be invalid; and
if the master PE fails first and the standby PE fails second, setting the next hop index in the forwarding table to be the standby PE and simultaneously setting the forwarding state of the standby PE to be invalid.

13. The device of claim 12, wherein the processor is further configured to:
after the BFD state of the master PE becomes down, when the BFD state of the master PE becomes up, update the next hop index in the forwarding table to the master PE and simultaneously set the forwarding state of the master PE to be valid; or
after the BFD state of the standby PE becomes down, when the BFD state of the standby PE becomes up, determine whether the BFD state of the master PE is up,
responsive to determining that the BFD state of the master PE is not up, update the next hop index in the forwarding table to the standby PE and simultaneously set the forwarding state of the standby PE to be valid, and
responsive to determining that the BFD state of the master PE is up, maintain the next hop index in the forwarding table to be the master PE and simultaneously set the forwarding state of the standby PE to be valid.

14. A computer readable storage medium, having a program stored thereon, that when being executed by a processor, causes the processor to perform the method according to any one of claims 1 to 8.

## Patentansprüche

1. Verfahren zum Weiterleiten einer Nachricht, welches durch ein erstes Anbieterrandgerät, PE, (PE3) ausgeführt wird, wobei die Nachricht zu einem Kundenrandgerät, CE, mittels einer Masterroute (PE3-PE1) oder einer Standbyroute (PE3-PE1-PE2) weitergeleitet wird, wobei die Masterroute ein Master PE (PE1) aufweist, entsprechend einem Master-Next-Hop, welcher ein letzter Hop zu dem CE ist, die Standbyroute ein Standby PE (PE2) aufweist, entsprechend einem Standby-Next-Hop, welcher ein letzter Hop zu dem CE ist,
wobei das erste PE eine erste Weiterleitungsausgangsschnittstelle zu einer Verbindung einer Gemeinschaftsroute (PE3-PE1), welche von der Masterroute und der Standbyroute geteilt wird, und eine zweite Weiterleitungsausgangsschnittstelle zu einem anderen PE (PE4) aufweist; wobei das erste PE eine Weiterleitungstabelle zum Weiterleiten der Nachricht bestimmt und wobei die Weiterleitungstabelle aufweist;
einen ersten Eintrag für den Master-Next-Hop, die erste Weiterleitungsausgangsschnittstelle zu verwenden;
einen zweiten Eintrag für den Standby-Next-Hop, die erste Weiterleitungsausgangsschnittstelle zu verwenden;
**dadurch gekennzeichnet, dass** das Verfahren aufweist:
Bestimmen, dass ein Fehler in der Verbindung der Gemeinschaftsroute, welche von der Masterroute und der Standbyroute geteilt wird, aufgetreten ist;
Bestimmen, dass das Master PE und das Standby PE fehlgeschlagen haben, wobei ein bidirektionaler Weiterleitungsdetektions-, BFD, Zustand verwendet wird, zu detektieren, ob das Master PE oder das Standby-PE zuerst fehlschlägt;
falls das Master PE zuerst fehlgeschlagen hat und das Standby-PE als zweites fehlgeschlagen hat, Aufrechterhalten der Standbyroute als eine aktive Route (PE3-PE4-PE2), wobei die Standbyroute zu einer Route über das andere PE (PE4) verändert wird,
und Aktualisieren der Weiterleitungstabelle, wobei der erste Eintrag aktualisiert wird, um die zweite Weiterleitungsausgangsschnittstelle zu verwenden und wobei ein Weiterleitungszustand des ersten Eintrags als ungültig gesetzt wird;
der zweite Eintrag aktualisiert wird, um die zweite Weiterleitungsausgangsschnittstelle zu verwenden und wobei ein Weiterleitungszustand des zweiten Eintrags als gültig gesetzt wird;
falls das Standby PE zuerst fehlgeschlagen hat und das Master PE als zweites fehlgeschlagen hat, Aufrechterhalten der Masterroute als die aktive Route (PE3-PE4-PE2-PE1), wobei die Masterroute zur Route über das andere PE (PE4) verändert wird;
und Aktualisieren der Weiterleitungstabelle, wobei der erste Eintrag aktualisiert wird, um die zweite Weiterleitungsausgangsschnittstelle zu verwenden und wobei der Weiterleitungszustand des ersten Eintrags als gültig gesetzt wird;
der zweite Eintrag aktualisiert wird, um die zweite Weiterleitungsausgangsschnittstelle zu verwenden und wobei der Weiterleitungszustand des zweiten Eintrags als ungültig gesetzt wird; Weiterleiten der Nachricht an das CE mittels der aktiven Route entsprechend der Weiterleitungstabelle.

2. Verfahren nach Anspruch 1, wobei das Weiterleiten der Nachricht an das CE mittels der aktiven Route aufweist:
Bestimmen der Weiterleitungstabelle für die aktive Route zum Weiterleiten der Nachricht.

3. Verfahren nach Anspruch 2, wobei das Bestimmen der Weiterleitungstabelle für die aktive Route zum Weiterleiten der Nachricht aufweist:
Bestimmen einer Label-Verteilungsprotokoll-, LDP, Labeltabelle für das Master PE und das Standby PE und einer Multi Protokolllabelschaltungs-, MPLS, Servicetabelle; und
Bestimmen der Weiterleitungstabelle gemäß einem Fehlerdetektionszustand des Master PE und des Standby PE, der MPLS-Servicetabelle und der LDP-Labeltabelle.

4. Verfahren nach Anspruch 3, wobei das Bestimmen der Weiterleitungstabelle gemäß dem Fehlerdetektionszustand des Master PE und des Standby PE, der MPLS-Servicetabelle und der LDP-Labeltabelle aufweist:
wenn bestimmt wird, dass der BFD Zustand des Master PE down wird, falls das Master PE zuerst fehlschlägt und das Standby PE als zweites fehlschlägt, Setzen eines nächsten Hop-Index in der Weiterleitungstabelle als das Standby PE und gleichzeitig Setzen des Weiterleitungszustands des Master PE als ungültig; und
falls das Standby PE zuerst fehlschlägt und das Master PE als zweites fehlschlägt, Setzen des nächsten Hop-Index in der Weiterleitungstabelle als das Master PE und gleichzeitig Setzen des Weiterleitungszustands des Master PE als gültig.

5. Verfahren nach Anspruch 3, wobei das Bestimmen der Weiterleitungstabelle gemäß dem Fehlerdetektionszustand des Master PE und des Standby PE, der MPLS-Servicetabelle und der LPD-Labeltabelle weiter aufweist:
wenn bestimmt wird, dass der BFD Zustand des Standby PE down wird, falls das Standby PE zuerst fehlschlägt und das Master PE als zweites fehlschlägt, Setzen eines nächsten Hop-Index in der Weiterleitungstabelle als das nächste Master PE und gleichzeitig Setzen der Weiterleitungstabelle des Standby PE als ungültig; und
falls das Master PE zuerst fehlschlägt und das Standby PE als zweites fehlschlägt, Setzen des nächsten Hop-Index in der Weiterleitungstabelle als das Standby PE und gleichzeitig Setzen des Weiterleitungszustands des Standby PE als gültig.

6. Verfahren nach Anspruch 4, wobei das Verfahren weiter aufweist:
nachdem der BFD Zustand des Master PE down wird, wenn der BFD Zustand des Master PE up wird, Aktualisieren des nächsten Hop-Indexes in der Weiterleitungstabelle zu dem Master PE und gleichzeitig Setzen des Weiterleitungszustands des Master PE als gültig.

7. Verfahren nach Anspruch 5, wobei das Verfahren weiter aufweist:
nachdem der BFD Zustand des Standby PE down wird, wenn der BFD Zustand des Standby PE up wird, Bestimmen, ob der BFD Zustand des Master PE up ist;
reagierend auf das Bestimmen, dass der BFD Zustand des Master PE nicht up ist, Aktualisieren des nächsten Hop-Indexes in der Weiterleitungstabelle zu dem Standby PE und gleichzeitig Aktualisieren des Weiterleitungszustands des Standby PE als gültig; und
reagierend auf das Bestimmen, dass der BFD Zustand des Master PE up ist, Aufrechterhalten des nächsten Hop-Indexes in der Weiterleitungstabelle als Master PE und gleichzeitig Setzen des Weiterleitungszustands des Standby PE als gültig.

8. Verfahren nach Anspruch 2, wobei das Weiterleiten der Nachricht an das CE gemäß der Weiterleitungstabelle aufweist:
Bestimmen eines nächsten Hop PE, welcher die Nachricht weiterleitet, und einer Weiterleitungsausgangsschnittstelle gemäß der Weiterleitungstabelle; und
Senden der Nachricht an das bestimmte nächste Hop PE über die bestimmte Weiterleitungsausgangsschnittstelle und Anweisen des bestimmten nächsten Hop PE, die Nachricht an das CE weiterzuleiten.

9. Einrichtung zum Weiterleiten einer Nachricht, wobei die Einrichtung auf ein erstes Anbieterrandgerät, PE, (PE3) angewendet ist, wobei die Nachricht an ein Kundenrandgerät, CE, über eine Masterroute (PE3-PE1) oder einer Standbyroute (PE3-PE1-PE2) weitergeleitet wird, wobei die Masterroute ein Master PE (PE1) aufweist, entsprechend einem Master-Next-Hop,
welcher ein letzter Hop zu dem CE ist, die Standbyroute ein Standby PE (PE2) aufweist, entsprechend einem Standby-Next-Hop, welcher ein letzter Hop zu dem CE ist,
wobei das erste PE eine erste Weiterleitungsausgangsschnittstelle zu einer Verbindung einer Gemeinschaftsroute (PE3-PE1), welche von der Masterroute und der Standbyroute geteilt wird, und eine zweite Weiterleitungsausgangsschnittstelle zu einem anderen PE (PE4) aufweist; wobei das erste PE eingerichtet ist, eine Weiterleitungstabelle zum Weiterleiten der Nachricht zu bestimmen und wobei die Weiterleitungstabelle aufweist;
einen ersten Eintrag für den Master-Next-Hop, die erste Weiterleitungsausgangsschnittstelle zu verwenden;
einen zweiten Eintrag für den Standby-Next-Hop, die erste Weiterleitungsausgangsschnittstelle zu verwenden;
**dadurch gekennzeichnet, dass** die Einrichtung aufweist:
einen Speicher, welcher eingerichtet ist, Befehle zu speichern; und
einen Prozessor, welcher eingerichtet ist, die Befehle auszuführen, um:
zu bestimmen, dass ein Fehler in der Verbindung der Gemeinschaftsroute, welche von der Masterroute und der Standbyroute geteilt wird, aufgetreten ist, zu bestimmen, dass das Master PE und das Standby PE fehlgeschlagen haben, wobei ein bidirektionaler Weiterleitungsdetektions-, PFD, Zustand verwendet wird, zu detektieren, ob das Master PE oder das Standby-PE zuerst fehlschlägt;
falls das Master PE zuerst fehlgeschlagen hat und das Standby-PE als zweites fehlgeschlagen hat, die Standbyroute als eine aktive Route (PE3-PE4-PE2) aufrechtzuerhalten, wobei die Standbyroute zu einer Route über das andere PE (PE4) verändert wird,
und die Weiterleitungstabelle zu aktualisieren,
wobei der erste Eintrag aktualisiert wird, die zweite Weiterleitungsausgangsschnittstelle zu verwenden und wobei ein Weiterleitungszustand des ersten Eintrags als ungültig gesetzt wird; der zweite Eintrag aktualisiert wird, die zweite Weiterleitungsausgangsschnittstelle zu verwenden und wobei der Weiterleitungszustand des zweiten Eintrags als gültig gesetzt wird;
falls das Standby PE zuerst fehlgeschlagen hat und das Master PE als zweites fehlgeschlagen hat, die Masterroute als aktive Route (PE3-PE4-PE2-PE1) aufrechtzuerhalten, wobei die Masterroute zu einer Route über das eine andere PE (PE4) verändert wird;
und die Weiterleitungstabelle zu aktualisieren, wobei der erste Eintrag aktualisiert wird, die zweite Weiterleitungsausgangsschnittstelle zu verwenden und wobei der Weiterleitungszustand des ersten Eintrags als gültig gesetzt wird; der zweite Eintrag aktualisiert wird, die zweite Weiterleitungsausgangsschnittstelle zu verwenden und wobei der Weiterleitungszustand des zweiten Eintrags als ungültig gesetzt wird;
die Nachricht an das CE mittels der aktiven Route gemäß der Weiterleitungstabelle weiterzuleiten.

10. Einrichtung nach Anspruch 9, wobei der Prozessor ferner eingerichtet ist, um: die Weiterleitungstabelle für die aktive Route zum Weiterleiten der Nachricht zu bestimmen.

11. Einrichtung nach Anspruch 10, wobei der Prozessor ferner eingerichtet ist, um:
eine Label-Verteilungsprotokoll-, LDP, Labeltabelle für das Master PE und das Standby PE und eine Multi Protokolllabelschaltungs-, MPLS, Servicetabelle zu bestimmen; und
die Weiterleitungstabelle gemäß eines Fehlerdetektionszustands des Master PE und des Standby PE, der MPLS-Servicetabelle und der LDP-Labeltabelle zu bestimmen.

12. Einrichtung nach Anspruch 11, wobei der Prozessor ferner eingerichtet ist, um:
wenn das erste PE bestimmt, dass der BFD Zustand des Master PE down wird,
falls das Master PE zuerst fehlschlägt und das Standby PE als zweites fehlschlägt, einen nächsten Hop-Index in der Weiterleitungstabelle als das Standby PE zu setzen und gleichzeitig den Weiterleitungszustand des Master PE als ungültig zu setzen; und
falls das Standby PE zuerst fehlschlägt und das Master PE als zweites fehlschlägt, den nächsten Hop-Index in der Weiterleitungstabelle als das Master PE zu setzen und gleichzeitig den Weiterleitungszustand des Master PE als gültig zu setzen; oder
wenn das erste PE bestimmt, dass der BFD Zustand des Standby PE down wird,
falls das Standby PE zuerst fehlschlägt und das Master PE als zweites fehlschlägt, den nächsten Hop-Index in der Weiterleitungstabelle als das Master PE zu setzen und gleichzeitig den Weiterleitungszustand des Standby PE als ungültig zu setzen; und
falls das Master PE zuerst fehlschlägt und das Standby PE als zweites fehlschlägt, den nächsten Hop-Index in der Weiterleitungstabelle als das Standby PE zu setzen und gleichzeitig den Weiterleitungszustand des Standby PE als ungültig zu setzen.

13. Einrichtung nach Anspruch 12, wobei der Prozessor ferner eingerichtet ist, um:
nachdem der BFD Zustand des Master PE down wird, wenn der BFD Zustand des Master PE up wird, den nächsten Hop-Index in der Weiterleitungstabelle zu dem Master PE zu aktualisieren und gleichzeitig den Weiterleitungszustand des Master PE als gültig zu setzen; oder
nachdem der BFD Zustand des Standby PE down wird, wenn der BFD Zustand des Standby PE up wird, zu bestimmen, ob der BFD Zustand des Master PE up ist,
reagierend auf das Bestimmen, dass der BFD Zustand des Master PE nicht up ist, den nächsten Hop-Index in der Weiterleitungstabelle zu dem Standby PE zu aktualisieren und gleichzeitig den Weiterleitungszustand des Standby-PE als gültig zu setzen, und
reagierend auf das Bestimmen, dass der BFD Zustand des Master PE up ist, den nächsten Hop-Index in der Weiterleitungstabelle als das Master PE aufrechtzuerhalten und gleichzeitig den Weiterleitungszustand des Standby PE als gültig zu setzen.

14. Computerlesbares Speichermedium, welches ein Programm darauf gespeichert hat, das, wenn es durch einen Prozessor ausgeführt wird, verursacht, dass der Prozessor das Verfahren gemäß einem der Ansprüche 1 bis 8 ausführt.

## Revendications

1. Procédé de transfert d'un message, exécuté par un premier dispositif fournisseur de périphérie (PE) (PE3), le message étant transféré à un dispositif client de périphérie (CE) par l'intermédiaire d'une route principale (PE3-PE1) ou d'une route de réserve (PE3-PE1-PE2), la route principale comprenant un PE principal (PE1) correspondant à un tronçon suivant principal qui est un dernier tronçon vers le CE, la route de réserve comprenant un PE de réserve (PE2) correspondant à un tronçon suivant de réserve qui est un dernier tronçon vers le CE,
le premier PE comprenant une première interface sortante de transfert vers une liaison d'une route commune (PE3-PE1), partagée par la route principale et la route de réserve, et une seconde interface sortante de transfert vers un autre PE (PE4) ;
le premier PE déterminant une table de transfert pour transférer le message, et la table de transfert comprenant :
une première entrée pour le tronçon suivant principal pour utiliser la première interface sortante de transfert ;
une seconde entrée pour le tronçon suivant de réserve pour utiliser la première interface sortante de transfert ;
le procédé étant **caractérisé en ce qu'**il comprend les étapes consistant à :
déterminer qu'une défaillance s'est produite dans la liaison de la route commune partagée par la route principale et la route de réserve ;
déterminer que le PE principal et le PE de réserve ont failli, un état de détection de transfert bidirectionnel (BFD) étant utilisé pour détecter si le PE principal ou le PE de réserve a failli en premier ;
si le PE principal a failli en premier et si le PE de réserve a failli en second, maintenir la route de réserve en tant que route active (PE3-PE4-PE2), la route de réserve étant modifiée pour router par l'intermédiaire de l'autre PE (PE4) ; et mettre à jour la table de transfert, la première entrée étant mise à jour pour utiliser la seconde interface sortante de transfert et un état de transfert de la première entrée étant fixé comme non valide, la seconde entrée étant mise à jour pour utiliser la seconde interface sortante de transfert et un état de transfert de la seconde entrée étant fixé comme valide ;
si le PE de réserve a failli en premier et si le PE principal a failli en second, maintenir la route principale en tant que route active (PE3-PE4-PE2-PE1), la route principale étant modifiée pour router par l'intermédiaire de l'autre PE (PE4) ; et mettre à jour la table de transfert, la première entrée étant mise à jour pour utiliser la seconde interface sortante de transfert et l'état de transfert de la première entrée étant fixé comme valide, la seconde entrée étant mise à jour pour utiliser la seconde interface sortante de transfert et l'état de transfert de la seconde entrée étant fixé comme non valide ;
transférer le message au CE par l'intermédiaire de la route active selon la table de transfert.

2. Procédé selon la revendication 1, dans lequel le transfert du message au CE par l'intermédiaire de la route active comprend l'étape consistant à :
déterminer la table de transfert pour la route active pour transférer le message.

3. Procédé selon la revendication 2, dans lequel la détermination de la table de transfert pour la route active pour transférer le message comprend l'étape consistant à :
déterminer une table d'étiquettes sur protocole de distribution par étiquette (LDP) pour le PE principal et le PE de réserve et une table de services à commutation multiprotocole par étiquette (MPLS) ; et
déterminer la table de transfert selon une condition de détection de défaillance du PE principal et du PE de réserve, de la table de services MPLS et de la table d'étiquettes LDP.

4. Procédé selon la revendication 3, dans lequel la détermination de la table de transfert selon la condition de détection de défaillance du PE principal et du PE de réserve, de la table de services MPLS et de la table d'étiquettes LDP, comprend les étapes consistant à :
quand il est déterminé que l'état BFD du PE principal devient inactif,
si le PE principal faillit en premier et si le PE de réserve faillit en second, fixer un indice de tronçon suivant dans la table de transfert comme étant le PE de réserve et fixer simultanément l'état de transfert du PE principal comme étant non valide ; et
si le PE de réserve faillit en premier et si le PE principal faillit en second, fixer l'indice de tronçon suivant dans la table de transfert comme étant le PE principal et fixer simultanément l'état de transfert du PE principal comme étant valide.

5. Procédé selon la revendication 3, dans lequel la détermination de la table de transfert selon la condition de détection de défaillance du PE principal et du PE de réserve, de la table de services MPLS et de la table d'étiquettes LDP, comprend en outre les étapes consistant à :
quand il est déterminé que l'état BFD du PE de réserve devient inactif,
si le PE de réserve faillit en premier et si le PE principal faillit en second, fixer un indice de tronçon suivant dans la table de transfert comme étant le PE principal et fixer simultanément l'état de transfert du PE de réserve comme étant non valide ; et
si le PE principal faillit en premier et si le PE de réserve faillit en second, fixer l'indice de tronçon suivant dans la table de transfert comme étant le PE de réserve et fixer simultanément l'état de transfert du PE de réserve comme étant valide.

6. Procédé selon la revendication 4, le procédé comprenant en outre l'étape consistant à :
après que l'état BFD du PE principal est devenu inactif, quand l'état BFD du PE principal devient actif, mettre à jour l'indice de tronçon suivant dans la table de transfert comme étant le PE principal et fixer simultanément l'état de transfert du PE principal comme étant valide.

7. Procédé selon la revendication 5, le procédé comprenant en outre les étapes consistant à :
après que l'état BFD du PE de réserve est devenu inactif, quand l'état BFD du PE de réserve devient actif, déterminer si l'état BFD du PE principal est actif ;
en réponse à la détermination du fait que l'état BFD du PE principal n'est pas actif, mettre à jour l'indice de tronçon suivant dans la table de transfert comme étant le PE de réserve et mettre à jour simultanément l'état de transfert du PE de réserve comme étant valide ; et
en réponse à la détermination du fait que l'état BFD du PE principal est actif, maintenir l'indice de tronçon suivant dans la table de transfert comme étant le PE principal et fixer simultanément l'état de transfert du PE de réserve comme étant valide.

8. Procédé selon la revendication 2, dans lequel le transfert du message au CE selon la table de transfert comprend les étapes consistant à :
déterminer un PE de tronçon suivant qui transfère le message et une interface sortante de transfert selon la table de transfert ; et
envoyer le message au PE de tronçon suivant déterminé par l'intermédiaire de l'interface sortante de transfert déterminée et donner l'instruction au PE de tronçon suivant déterminé de transférer le message au CE.

9. Dispositif de transfert d'un message, le dispositif étant appliqué à un premier dispositif fournisseur de périphérie (PE) (PE3), le message étant transféré à un dispositif client de périphérie (CE) par l'intermédiaire d'une route principale (PE3-PE1) ou d'une route de réserve (PE3-PE1-PE2), la route principale comprenant un PE principal (PE1) correspondant à un tronçon suivant principal qui est un dernier tronçon vers le CE, la route de réserve comprenant un PE de réserve (PE2) correspondant à un tronçon suivant de réserve qui est un dernier tronçon vers le CE,
le premier PE comprenant une première interface sortante de transfert vers une liaison d'une route commune (PE3-PE1), partagée par la route principale et la route de réserve, et une seconde interface sortante de transfert vers un autre PE (PE4) ;
le premier PE étant configuré pour déterminer une table de transfert pour transférer le message, et la table de transfert comprenant :
une première entrée pour le tronçon suivant principal pour utiliser la première interface sortante de transfert ;
une seconde entrée pour le tronçon suivant de réserve pour utiliser la première interface sortante de transfert ;
le dispositif étant **caractérisé en ce qu'**il comprend en outre :
une mémoire configurée pour stocker des instructions ; et
un processeur configuré pour exécuter les instructions pour :
déterminer qu'une défaillance s'est produite dans la liaison de la route commune partagée par la route principale et la route de réserve, déterminer que le PE principal et le PE de réserve ont failli, un état de détection de transfert bidirectionnel (BFD) étant utilisé pour détecter si le PE principal ou le PE de réserve a failli en premier;
si le PE principal a failli en premier et si le PE de réserve a failli en second, maintenir la route de réserve en tant que route active (PE3-PE4-PE2), la route de réserve étant modifiée pour router par l'intermédiaire de l'autre PE (PE4) ; et mettre à jour la table de transfert, la première entrée étant mise à jour pour utiliser la seconde interface sortante de transfert et un état de transfert de la première entrée étant fixé comme non valide, la seconde entrée étant mise à jour pour utiliser la seconde interface sortante de transfert et un état de transfert de la seconde entrée étant fixé comme valide ;
si le PE de réserve a failli en premier et si le PE principal a failli en second, maintenir la route principale en tant que route active (PE3-PE4-PE2-PE1), la route principale étant modifiée pour router par l'intermédiaire de l'autre PE (PE4) ; et mettre à jour la table de transfert, la première entrée étant mise à jour pour utiliser la seconde interface sortante de transfert et l'état de transfert de la première entrée étant fixé comme valide, la seconde entrée étant mise à jour pour utiliser la seconde interface sortante de transfert et l'état de transfert de la seconde entrée étant fixé comme non valide ;
transférer le message au CE par l'intermédiaire de la route active selon la table de transfert.

10. Dispositif selon la revendication 9, dans lequel le processeur est en outre configuré pour :
déterminer la table de transfert pour la route active pour transférer le message.

11. Dispositif selon la revendication 10, dans lequel le processeur est en outre configuré pour :
déterminer une table d'étiquettes sur protocole de distribution par étiquette (LDP) pour le PE principal et le PE de réserve et une table de services à commutation multiprotocole par étiquette (MPLS) ; et
déterminer la table de transfert selon une condition de détection de défaillance du PE principal et du PE de réserve, de la table de services MPLS et de la table d'étiquettes LDP.

12. Dispositif selon la revendication 11, dans lequel le processeur est en outre configuré pour :
quand le premier PE détermine que l'état BFD du PE principal devient inactif,
si le PE principal faillit en premier et si le PE de réserve faillit en second, fixer un indice de tronçon suivant dans la table de transfert comme étant le PE de réserve et fixer simultanément l'état de transfert du PE principal comme étant non valide ; et
si le PE de réserve faillit en premier et si le PE principal faillit en second, fixer l'indice de tronçon suivant dans la table de transfert comme étant le PE principal et fixer simultanément l'état de transfert du PE principal comme étant valide ; ou
quand le premier PE détermine que l'état BFD du PE de réserve devient inactif,
si le PE de réserve faillit en premier et si le PE principal faillit en second, fixer l'indice de tronçon suivant dans la table de transfert comme étant le PE principal et fixer simultanément l'état de transfert du PE de réserve comme étant non valide ; et
si le PE principal faillit en premier et si le PE de réserve faillit en second, fixer l'indice de tronçon suivant dans la table de transfert comme étant le PE de réserve et fixer simultanément l'état de transfert du PE de réserve comme étant non valide.

13. Dispositif selon la revendication 12, dans lequel le processeur est en outre configuré pour :
après que l'état BFD du PE principal est devenu inactif, quand l'état BFD du PE principal devient actif, mettre à jour l'indice de tronçon suivant dans la table de transfert comme étant le PE principal et fixer simultanément l'état de transfert du PE principal comme étant valide ; ou
après que l'état BFD du PE de réserve est devenu inactif, quand l'état BFD du PE de réserve devient actif, déterminer si l'état BFD du PE principal est actif,
en réponse à la détermination du fait que l'état BFD du PE principal n'est pas actif, mettre à jour l'indice de tronçon suivant dans la table de transfert comme étant le PE de réserve et fixer simultanément l'état de transfert du PE de réserve comme étant valide, et
en réponse à la détermination du fait que l'état BFD du PE principal est actif, maintenir l'indice de tronçon suivant dans la table de transfert comme étant le PE principal et fixer simultanément l'état de transfert du PE de réserve comme étant valide.

14. Support de stockage lisible par ordinateur, sur lequel est stocké un programme qui, lorsqu'il est exécuté par un processeur, amène le processeur à réaliser le procédé selon l'une quelconque des revendications 1 à 8.
